# EUROPEAN PATENT SPECIFICATION

(11) **EP 2 500 613 B1**
(45) Date of publication and mention of the grant of the patent: **02.07.2014**
(21) Application number: 12159545.8
(22) Date of filing: 14.03.2012
(51) Int. Cl.: F23J 13/02, F16L 37/244

(54) **A system for joining elements of a chimney duct**
Rohrbausystem mit Rohrelementen zur Herstellung eines Rauchabzugs
Système de raccordement d'éléments d'une cheminée

(30) Priority: 14.03.2011 IT TO20110229
(43) Date of publication of application: 19.09.2012
(73) Proprietor: OLI S.r.l., Casto (IT); Lim-Mont D.O.O., Donji Martijanec (HR)
(72) Inventor: Sasselli, Alfiero, 37133 Verona (IT)
(74) Representative: Bergadano, Mirko

(56) References cited:
- EP-A1- 1 887 269
- EP-A2- 1 760 384
- DE-U1- 20 112 692
- DE-U1-202005 005 852
- US-A- 1 645 032
- US-A- 2 673 751
- US-A1- 2005 087 985

## Description

The invention relates to a rapid joining system for joining elements of a chimney duct.

A chimney duct generally consists of various elements (pieces of tube and/or fittings) joined to one another.

The union of the various elements must ensure not only an adequate mechanical connection between the elements (so as to avoid them from being accidentally pulled out), but also their fluid-tight coupling, least at up to predetermined pressure values of the gases circulating in the chimney duct (combustion fumes, condensation vapors, etc.), generally required in sector standards.

Various systems for connecting chimney duct elements are known.

In one known system, the elements are provided with a female side and a male side, arranged at respective ends of the elements: the mechanical joining of the elements is obtained by means of a socket (flare) on the female side, in which the male side is engaged; pressure- and condensation-tightness is obtained by means of a seal, the seat of which can be made either on the female side or on the male side; a metal clamp is used to avoid the elements from being pulled out, which clamp is externally applied and wound on the elements once they have been joined.

According to another system, the mechanical coupling is obtained by threading or drawing and fitting the two ends (male and female ends); pressure-tightness is again obtained by means of a seal, the seat of which may be obtained either on the female side or on the male side of the element.

In other systems, pressure-tightness is also obtained mechanically, in particular by shape coupling, without using seals; the male side and the female side of the elements are either appropriately calibrated or made so as to create a positive and negative taper ratio on the two sides to be joined; the pulling-out resistance is obtained either by means of an outer metal clamp or by force fitting the conical elements within one another.

US 2 673 751 shows a rapid joining system according to the preamble of claim 1.

In all cases, the known systems may have margins for improvement, in particular with regards to use efficacy and practicality, and to construction and assembling simplicity and speed.

It is an object of the present invention to provide a system for joining the elements of a chimney duct which is free from the above-mentioned drawbacks of the prior art; in particular, it is an object of the invention to provide a system which is highly easy and cost-effective to be implemented, simple and quick to be used in order to manufacture chimney ducts, while being fully effective both in terms of mechanical tightness, and pressure-tightness with regards to the gases circulating in the chimney duct.

The present invention thus relates to a system for joining the elements of a chimney duct as defined in essential terms in appended claim 1 and in the dependent claims as far as its additional features are concerned.

The system of the invention, in addition to being particularly simple and cost-effective to be implemented, is simple and quick to be used in order to assemble chimney ducts, and is fully efficient both in terms of mechanical tightness and pressure-tightness with regards to the gas circulating in the chimney duct.

Further features and advantages of the present invention will be apparent from the following description of a non-limitative embodiment thereof, with reference to the figures of the accompanying drawings, in which:
- figure 1 is an elevation diagrammatic side view of a chimney duct forming part of a rapid joining system for chimney duct elements in accordance with the invention;
- figure 2 is a perspective diagrammatic view of the element in figure 1;
- figure 3 is an elevation diagrammatic side view of a variant of the element in figure 1.

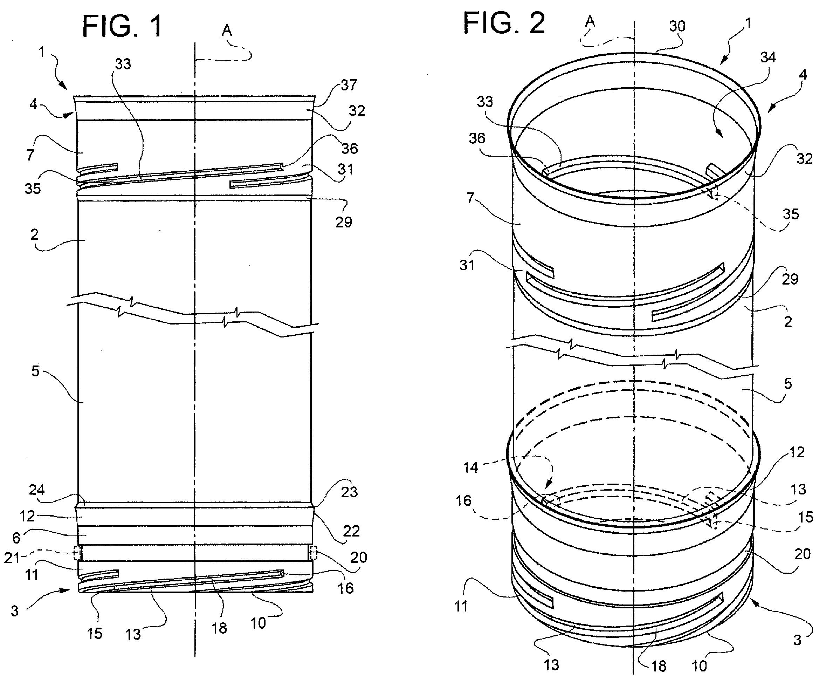

Reference numeral 1 in figures 1-2 indicates as a whole a rapid joining system for chimney duct elements.

System 1 comprises a plurality of elements 2, only one of which is shown in figure 1 for simplicity; in the example shown in figure 1, element 2 is a piece of tube extending along and about a rectilinear axis A, but obviously system 1 generally includes elements 2 of different shapes and size, in particular tubes of various lengths, curves, T-fittings, etc.

Element 2, for example (but not necessarily) made of metal material, extends along axis A (which in the example shown is rectilinear, but it may also be curved or broken) between two opposite ends 3, 4.

Element 2 has a central main body 5 (cylindrical in this case) having a predetermined diameter and a constant cross section along axis A.

End 3 has a male member 6, and end 4 has a female member 7.

Starting from a free end edge 10, the male member 6 comprises a substantially cylindrical guide portion 11 (having a substantially constant cross section along axis A) and a conical portion 12, converging towards the edge 10.

A "conical portion" means a generally flared or diverging portion, i.e. having transversal dimensions (section) increasing in one direction.

In this case, the conical portion 12 is either converging or tapered (it narrows) towards the edge 10.

The guide portion 11 has a plurality of radially inner, inclined projections 13, which radially project from a lateral inner surface 14 of portion 11 and are circumferentially in a sequential arrangement.

Projections 13 are inclined with respect to axis A and to edge 10, and are separated from one another.

Each projection 13 extends on the surface 14 between a start head 15 and an end head 16; the start heads 15 are preferably circumferentially aligned with respect to one another (i.e. equally spaced apart from edge 10); the end heads 16 are also circumferentially aligned with respect to one another, and are at a greater distance 10 than the start heads 15.

The projections 13 follow the curvature of the surface 14 and have a rectilinear development (projection on a plane parallel to axis A).

The projections 13 have length (circumferentially measured on surface 14) such that the end head 16 of each projection 13 is axially overlaying (in the axial direction along axis A) or substantially aligned to the start head 15 of the following projection 13.

Preferably, as shown in figure 1, the projections 13 depart obliquely and directly from the edge 10, i.e. the start heads 15 of the projections 13 are in contact with edge 10.

Especially when element 2 is made of a plastic material, the projections 13 are advantageously obtained by means of plastic deformation (drawing) of a lateral wall of element 2, in particular of portion 11, and thus portion 11 has an outer lateral surface 17 of the grooves 18 corresponding to the projections 13.

Portion 11 preferably has at least three or more, preferably four or more, projections 13, evenly distributed about axis A.

Portion 11 also has a circumferential annular seat 20 arranged between the projections 13 and the conical portion 12. The seat 20, particularly formed outside the lateral surface 17 of portion 11, accommodates a sealing member 21, e.g. a ring made of elastomeric material (shown with a dashed line in figure 1).

The conical portion 12 is arranged between guide portion 11 and body 5, and centrally converges towards edge 10; portion 12 has a substantially frustum-shaped outer lateral surface 22; indicatively (but not necessarily), portion 12 has a taper ratio (defined by the angle between axis A and surface 22) between about 3° and about 5°.

Portion 12 ends on the side of body 5 with an edge 23 having a diameter which is greater than the diameter of body 5; a radially outer joining flange 24 (optionally inclined with respect to axis A) connects body 5 to edge 23.

The female member 7 is shaped so as to receive the male member 6 of another element 2.

In particular, the female member 7 extends between a root edge 29, connected to body 5, and a free end edge 30 (opposite to the edge 10 of the male member 6); starting from the root edge 29, the female member 7 comprises a substantially cylindrical guide portion 31 (having a cross section which is substantially constant along axis A), and a connection portion 32, substantially cylindrical, or preferably (as shown in figure 1-2) conical (flared) and specifically diverging towards edge 30 and converging towards body 5.

Portion 31 has a plurality of projections 33, formed on an inner lateral surface 34 of portion 31 and shaped as the projections 13 so as to cooperate with respective projections 13.

The projections 33 have the same shape and arrangement as the projections 13 and are thus inclined with respect to axis A like the projections 13 and are circumferentially placed in sequence.

The projections 33 also extend on the surface 34 between the respective start heads 35 (circumferentially aligned with respect to one another) and respective end heads 36 (circumferentially aligned with respect to one another), and have a circumferential length such that the end head 36 of each projection 33 is axially overlaying the start head 35 of the next projection 33.

Portion 31 is dimensioned so as to accommodate portion 11, which can be inserted into portion 31 by sliding along axis A, substantially without radial interference; in other words, there is a small radial clearance between portion 11 of the male member 6 and portion 31 of the female member 7.

Portion 32 is arranged at end 4 and includes the edge 30; portion 32 has a substantially frustum-shaped, outer lateral surface 37 having a shape similar to surface 22 and thus with a similar or equal taper ratio; surface 37 may however have a shape different from surface 22, e.g. may be substantially cylindrical.

In use, in order to join two elements 2 of system 1 in order to form a chimney duct, the male member 6 of a first element 2 is inserted into the female member 7 of a second element 2, by axially sliding the elements 2 with respect to one another along axis A.

The male member 6 slides along axis A within the female member 7 until they axially rests on respective protrusions 33; at this point, by turning the two elements 2 with respect to each other about axis A, the projections 14 axially engage respective projections 33 and axially move portion 11 into the portion 31, taking portion 11 towards the body 5.

This movement takes portion 12 into portion 32: the tapered/flared shape of portion 12 determines the forced coupling of portion 12 and of portion 32, and thus creates the union (mechanical and fluid-tight union) between the male member 6 and the female member 7.

In order to further ensure that the coupling is of the fluid-tight type, the sealing member 21 can be used, which is radially interposed between the male member 6 and the female member 7, and precisely between the outer lateral surface 17 of the male member 6 and the inner lateral surface 34 of the female member 7.

System 1 also allows to reciprocally orient the elements 2 to be joined, as needed, with fittings, curves, etc.: a corresponding number of predetermined angular positions is obtained according to the provided number of projections 13, 33 for coupling the elements 2. In order to vary the orientation between two elements 2, it is sufficient to join them using different pairs of projections 13, 33 cooperating with one another.

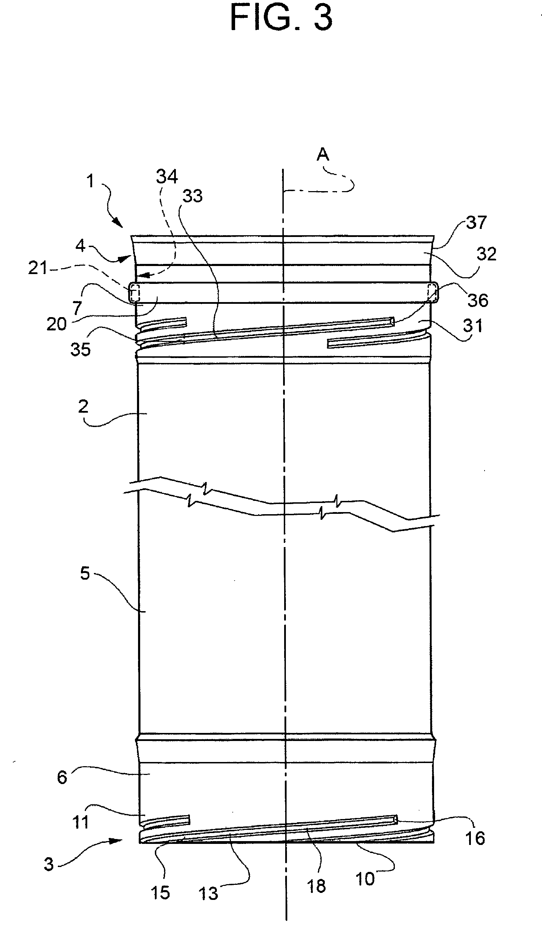

In the variant shown in figure 3, where the details which are similar or equivalent to those already described are indicated with the same reference numbers, the sealing member 21 is accommodated in a seat 20 obtained on the inner lateral surface 34 of portion 31 rather on the outer lateral surface 17 of portion 11, which thus has a corresponding radially outer circumferential protrusion.

Finally, it is understood that further changes and variations can be made to the system described and shown herein without departing from the scope of the appended claims.

## Claims

1. A rapid joining system (1) for joining the elements of a chimney duct, comprising elements (2) connectable to one another to form a chimney duct; each element (2) extending along and about an axis (A) and comprising a male member (6) and a female member (7), arranged at opposite ends (3, 4) of the element (2); wherein the male member (6) and the female member (7) comprise respective guide portions (11, 31), provided with respective series of projections (13, 33) inclined with respect to the axis (A) and cooperating for axially moving the male member (6) into the female member (7);
and wherein the male member (6) comprises a conical portion (12), shaped so as to externally receive a connection portion (32) of the female member (7) and radially force said connection portion (32) upon the movement of the male member (6) into the female member (7); the male member (6) and the female member (7) having respective pluralities of inclined projections (13, 33), **characterised in that** the projections are circumferentially in sequence and radially project from respective inner lateral surfaces (14, 34) of the guide portions (11, 31); each projection (13, 33) extending between a start head (15) and an end head (16), and the projections (13, 33) having a length such that the end head (16) of each projection (13, 33) is axially overlaying the start head (15) of the following projection (13, 33); the projections (13) of the male member (6) obliquely depart directly from a free end edge (10) of the male member (6).

2. A system according to claim 1, wherein the projections (13, 33) of the male member (6) and of the female member (7) cooperate to move the male member (6) into the female member (7) by means of a rotation about axis (A) and by sliding along axis (A).

3. A system according to one of the preceding claims, wherein each guide portion (11, 13) has at least three, and preferably at least four, projections (13, 33).

4. A system according to one of the preceding claims, wherein the connection portion (32) of the female member is substantially either cylindrical or conical and specifically diverging towards a free end edge (30) of the female member (7).

5. A system according to one of the preceding claims, wherein the guide portion (11) of the male member (6) is arranged close to a free end edge (10) of the male member (6), and the conical portion (12) of the male member (6) is arranged between said guide portion (11) of the male member (6) and a main body (5) of the element (2); the connection portion (32) of the female element (7) being arranged close to a free end edge (30) of the female member (7), and the guide portion (31) of the female member (7) being arranged between said connection portion (32) of the female element (7) and said main body (5).

6. A system according to one of the preceding claims, comprising a sealing member (21), for example a ring made of elastomeric material, radially interposed between the male member (6) and the female member (7).

7. A system according to claim 6, wherein the sealing member (21) is housed in a circumferential annular seat (20) formed either on an outer lateral surface (17) of the guide portion (11) of the male member (6) or on an inner lateral surface (34) of the guide portion (31) of the female member (7).

## Patentansprüche

1. Schnellverbindungssystem (1) zum Verbinden der Elemente eines Kaminabzugs bzw. -kanals, das Elemente (2) umfasst, die miteinander verbindbar sind, um einen Kaminabzug zu bilden; wobei sich jedes Element (2) entlang und um eine Achse (A) erstreckt und ein männliches bzw. aufzunehmendes Glied (6) und ein weibliches bzw. aufnehmendes Glied (7) umfasst, die an entgegengesetzten Enden (3, 4) des Elements (2) angeordnet sind; wobei das aufzunehmende Glied (6) und das aufnehmende Glied (7) jeweilige Führungsabschnitte (11, 31) umfassen, die mit einer jeweiligen Reihe von Vorsprüngen (13, 33) versehen sind, die in Bezug auf die Achse (A) geneigt sind und zusammenwirken, um das aufzunehmende Glied (6) axial in das aufnehmende Glied (7) zu bewegen, und wobei das aufzunehmende Glied (6) einen konischen Abschnitt (12) umfasst, der derart geformt ist, dass er einen Verbindungsabschnitt (32) des aufnehmenden Glieds (7) außen aufnimmt und den Verbindungsabschnitt (32) bei der Bewegung des aufzunehmenden Glieds (6) radial in das aufnehmende Glied (7) presst; wobei das aufzunehmende Glied (6) und das aufnehmende Glied (7), die jeweils eine Vielzahl geneigter Vorsprünge (13, 33) haben,
**dadurch gekennzeichnet, dass** die Vorsprünge dem Umfang nach nacheinander sind und radial von den jeweiligen inneren seitlichen Oberflächen (14, 34) der Führungsabschnitte (11, 31) vorstehen; wobei sich jeder Vorsprung (13, 33) zwischen einem Anfangsstück (15) und einem Endstück (16) erstreckt und die Vorsprünge (13, 33) mit einer derartigen Länge, dass das Endstück (16) jedes Vorsprungs (13, 33) das Anfangsstück (15) des folgenden Vorsprungs (13, 33) axial überlagert; wobei die Vorsprünge (13) des aufzunehmenden Glieds (6) direkt von einem freien Endrand (10) des aufzunehmenden Glieds (6) schräg abrücken.

2. System nach Anspruch 1, wobei die Vorsprünge (13, 33) des aufzunehmenden Glieds (6) und des aufnehmenden Glieds (7) zusammenwirken, um das aufzunehmende Glied (6) mittels einer Drehung um die Achse (A) und durch Verschieben entlang der Achse (A) in das aufnehmende Glied (7) zu bewegen.

3. System nach einem der vorhergehenden Ansprüche, wobei jeder Führungsabschnitt (11, 13) wenigstens drei und vorzugsweise wenigstens vier Vorsprünge (13, 33) hat.

4. System nach einem der vorhergehenden Ansprüche, wobei der Verbindungsabschnitt (32) des aufnehmenden Glieds im Wesentlichen entweder zylindrisch oder konisch ist und insbesondere in Richtung eines freien Endrands (30) des aufnehmenden Glieds (7) auseinander läuft.

5. System nach einem der vorhergehenden Ansprüche, wobei der Führungsabschnitt (11) des aufzunehmenden Glieds (6) nahe an einem freien Endrand (10) des aufzunehmenden Glieds (6) angeordnet ist und der konische Abschnitt (12) des aufzunehmenden Glieds (6) zwischen dem Führungsabschnitt (11) des aufzunehmenden Glieds (6) und einem Hauptkörper (5) des Elements (2) angeordnet ist; wobei der Verbindungsabschnitt (32) des aufnehmenden Glieds (7) nahe an einem freien Endrand (30) des aufnehmenden Glieds (7) angeordnet ist und der Führungsabschnitt (31) des aufnehmenden Glieds (7) zwischen dem Verbindungsabschnitt (32) des aufnehmenden Glied (7) und dem Hauptkörper (5) angeordnet ist.

6. System nach einem der vorhergehenden Ansprüche, das ein Dichtungselement (21), zum Beispiel einen aus einem elastomeren Material gefertigten Ring, umfasst, das radial zwischen dem aufzunehmenden Glied (6) und dem aufnehmenden Glied (7) eingefügt ist.

7. System nach Anspruch 6, wobei das Dichtungselement (21) in einem ringförmigen Umfangssitz bzw. -auflager (20) aufgenommen ist, das entweder auf einer äußeren Seitenfläche (17) des Führungsabschnitts (11) des aufzunehmenden Glieds (6) oder auf einer inneren Seitenfläche (34) des Führungsabschnitts (31) des aufnehmenden Glieds (7) ausgebildet ist.

## Revendications

1. Système d'assemblage rapide (1) pour assembler les éléments d'un conduit de cheminée, comprenant des éléments (2) pouvant être raccordés les uns aux autres afin de former un conduit de cheminée; chaque élément (2) s'étendant le long et autour d'un axe (A) et comprenant un élément mâle (6) et un élément femelle (7), agencés aux extrémités opposées (3, 4) de l'élément (2); dans lequel l'élément mâle (6) et l'élément femelle (7) comprennent des parties de guidage (11, 31) respectives, prévues avec des séries respectives de saillies (13, 33) inclinées par rapport à l'axe (A) et coopérant pour déplacer axialement l'élément mâle (6) dans l'élément femelle (7); et dans lequel l'élément mâle (6) comprend une partie conique (12) formée afin de recevoir extérieurement une partie de raccordement (32) de l'élément femelle (7) et forcer radialement ladite partie de raccordement (32) suite au mouvement de l'élément mâle (6) dans l'élément femelle (7); l'élément mâle (6) et l'élément femelle (7) ayant des pluralités respectives de saillies inclinées (13, 33), **caractérisé en ce que** les saillies sont circonférentiellement en séquence et font radialement saillie à partir des surfaces latérales internes (14, 34) respectives des parties de guidage (11, 31); chaque saillie (13, 33) s'étendant entre une tête de départ (15) et une tête de fin (16), et les saillies (13, 33) ayant une longueur de sorte que la tête de fin (16) de chaque saillie (13, 33) recouvre axialement la tête de départ (15) de la saillie (13, 33) suivante; les saillies (13) de l'élément mâle (6) s'éloigne obliquement directement d'un bord d'extrémité libre (10) de l'élément mâle (6).

2. Système selon la revendication 1, dans lequel les saillies (13, 33) de l'élément mâle (6) et de l'élément femelle (7) coopèrent pour déplacer l'élément mâle (6) dans l'élément femelle (7) au moyen d'une rotation autour de l'axe (A) et en coulissant le long de l'axe (A).

3. Système selon l'une des revendications précédentes, dans lequel chaque partie de guidage (11, 13) a au moins trois et de préférence au moins quatre saillies (13, 33).

4. Système selon l'une des revendications précédentes, dans lequel la partie de raccordement (32) de l'élément femelle est sensiblement cylindrique ou conique et divergeant spécifiquement vers un bord d'extrémité libre (30) de l'élément femelle (7).

5. Système selon l'une des revendications précédentes, dans lequel la partie de guidage (11) de l'élément mâle (6) est agencée à proximité d'un bord d'extrémité libre (10) de l'élément mâle (6) et la partie conique (12) de l'élément mâle (6) est agencée entre ladite partie de guidage (11) de l'élément mâle (6) et un corps principal (5) de l'élément (2); la partie de raccordement (32) de l'élément femelle (7) étant agencée à proximité d'un bord d'extrémité libre (30) de l'élément femelle (7), et la partie de guidage (31) de l'élément femelle (7) étant agencée entre ladite partie de raccordement (32) de l'élément femelle (7) et ledit corps principal (5).

6. Système selon l'une des revendications précédentes, comprenant un élément d'étanchéité (21), par exemple une bague réalisée à partir d'un matériau élastomère, radialement intercalé entre l'élément mâle (6) et l'élément femelle (7).

7. Système selon la revendication 6, dans lequel l'élément d'étanchéité (21) est logé dans un siège annulaire circonférentiel (20) formé sur une surface latérale externe (17) de la partie de guidage (11) de l'élément mâle (6) ou sur une surface latérale interne (34) de la partie de guidage (31) de l'élément femelle (7).
